# EUROPEAN PATENT APPLICATION

(11) **EP 4 461 153 A1**
(43) Date of publication of application: **13.11.2024**
(21) Application number: 23173265.2
(22) Date of filing: 12.05.2023
(51) Int. Cl.: A24F 40/60, G06F 3/01, G08B 6/00

(54) **ELECTRONIC VAPING DEVICE ADAPTED TO EMIT A CONTACTLESS HAPTIC STIMULUS**

(71) Applicant: JT International SA, 1202 Geneva (CH)
(72) Inventor: MONTICONE, Pier Paolo, 1218 LE GRAND-SACONNEX (CH)
(74) Representative: Plasseraud IP

(57) **Abstract**

An electronic vaping device (10) comprises a casing (18) receiving at least one transducer (32) adapted to emit a plurality of ultrasound waves (UW) adapted to be focused onto at least one spot (34) outside the casing (18) to generate a pressure at the at least one spot (34) which can be felt by a pressure receptor of a user's skin or tongue (36).

## Description

### Technical Field

The present disclosure relates to an electronic vaping device adapted to emit a contactless haptic stimulus. The contactless haptic stimulus can provide an indication of a status of the electronic vaping device. The contactless haptic feedback can also improve the experience of the user of the electronic vaping device. The electronic vaping device may be configured to heat material, which may be made or derived from tobacco or otherwise incorporate tobacco, to form an inhalable substance for human consumption.

### Background Art

US-A-2021/282465 describes an aerosol-generating device for generating an inhalable aerosol. The device includes an airflow sensor to detect airflow through an airflow channel of the device and a detection element to detect at least one of: a type of aerosol-generating article inserted into a heating chamber of the device, a length of a draw of the user, a number of draws over a period of time, and a time of day of the draw of the user. The device further includes a haptic element to provide a haptic feedback to a user, and a controller, connected with the detection element and the haptic element. The controller is configured to control an operation of the haptic element based on the detection element.

The aerosol-generating device describes in US-A-2021/282465 provides a haptic feedback to the user.

However, the haptic feedback provided by the aerosol-generating device described in US-A-2021/282465 is limited. This haptic feedback requires a physical contact between an area of a user and the device to transmit the vibrations that the user feels in the contact area, thanks to pressure receptors of the user.

### Summary

An aim of the present disclosure is to provide an electronic vaping device improving the experience of the user.

Accordingly, the present disclosure discloses an electronic vaping device comprising a casing receiving at least one transducer adapted to emit a plurality of ultrasound waves adapted to be focused onto at least one spot outside the casing to generate a pressure at the at least one spot which can be felt by a pressure receptor of a user's skin or tongue..

Thus, a contactless haptic stimulus can be provided to the user of the electronic vaping device without above-mentioned physical contact between the area of the user and the device. Different areas of the user can be stimulated with regard to the areas stimulated by the electronic vaping device described in US-A-2021/282465.

The following features can be optionally implemented, separately or in combination one with the others:
- the electronic vaping device comprises a plurality of transducers, wherein each transducer is adapted to emit an ultrasound wave with a specific phase delay, onto said at least one spot so that the difference between the specific phase delays of the ultrasound waves is minimized at the at least one spot;
- the electronic vaping device comprises focusing means interposed between the plurality of transducers and the at least one spot, the focusing means being adapted to focus ultrasound waves emitted by the plurality of transducers, each with a specific phase delay, onto said at least one spot so that the difference between the phase delays of the ultrasound waves is minimized on said at least one spot;
- the electronic vaping device comprises a plurality of transducers wherein each transducer is adapted to emit an ultrasound wave with a specific frequency onto said at least one spot outside the casing;
- the transducers are arranged to form an array of transducers;
- the electronic vaping device comprises only one transducer, the transducer being adapted to emit a plurality of ultrasound waves, each with a specific phase delay, and focusing means adapted to focus the ultrasound waves onto the at least one spot outside the casing, so that the difference between the specific phase delays is minimized on the at least one spot;
- the electronic vaping device comprises only one transducer, the transducer being adapted to emit a plurality of ultrasound waves, each with a specific frequency, onto the at least one spot;
- the focusing means includes an acoustic lens;
- the acoustic lens is made in a material in which ultrasound waves propagate faster than in air, the acoustic lens being preferably concave;
- the acoustic lens is formed by the casing of the electronic vaping device, especially an end of the housing of the electronic vaping device;
- the acoustic lens if formed by a mouthpiece of the electronic vaping device;
- the at least one spot outside the casing is adapted to correspond to a spot on a tongue or on a chick of a user of said electronic vaping device, when the electronic vaping device is received in a mouth of the user;
- the electronic vaping device further comprises an electronic command unit adapted to control at least one among the at least one transducer and the focusing means, if applicable, to move the at least one spot;
- the electronic vaping device further comprises an electronic command unit adapted to control at least one among the at least one transducer and the focusing means, if applicable, to modulate, especially to pulse, pressure on the at least one spot; and
- the electronic command unit is adapted to control at least one among the at least one transducer and the focusing means, if applicable, in response to a signal indicating an end of a vaping session.

### Brief Description of Drawings

Other features, details and advantages will be shown in the following detailed description and on the figures, on which:
FIG. 1 schematically shows a cross-section of a first example of an electronic vaping device.
FIG. 2 schematically shows a cross-section of a detail of the first example of an electronic vaping device.
FIG. 3 is a view similar to FIG. 2, of a detail of a second example of an electronic vaping device.
FIG. 4 schematically shows a third example of an electronic vaping device.

### Description of Embodiments

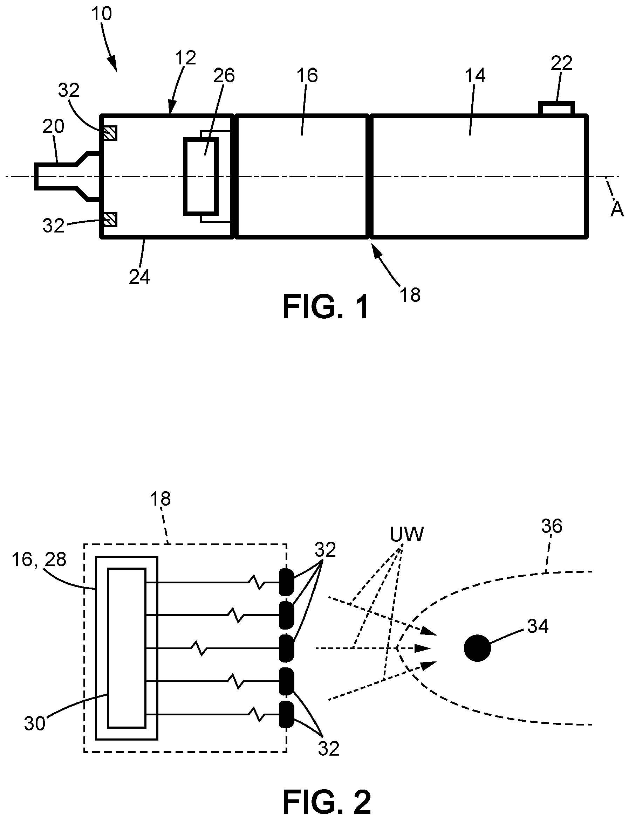

FIG. 1 schematically shows an example of an electronic vaping device **10** - also referred to as an aerosol generating device.

Such an electronic vaping device **10** has become a popular alternative to traditional tobacco products such as cigarettes, cigars or pipes. By contrast to these traditional products, which rely on combustion of tobacco, an electronic vaping device **10** typically produces a vapor or aerosol for inhalation by a user.

In the electronic vaping device **10,** a substrate containing tobacco or other suitable material can be heated to a temperature that is sufficiently high to generate an aerosol from the material but not so high as to cause combustion of the material. Preferably, the electronic vaping device **10** does not produce any smoke. The aerosol produced by heating the substrate containing tobacco contains the components of the material sought by the user but not the undesired by-products of combustion that are generated when the material combusts. Accordingly, this kind of device is sometimes referred to as a "reduced-risk device".

As illustrated on FIG. 1, the electronic vaping device **10** can comprise a vaporizer **12,** a power unit **14** for powering the vaporizer **12,** and a controller **16.** The vaporizer **12,** the power unit **14** and the controller **16** may be comprised in a casing **18** (or housing). The casing **18** may be elongated along a longitudinal axis **A.** A mouthpiece **20** may be fixed on one end of the casing **18.** The casing **18** may be provided with an ON/OFF button **22** for selectively switching on/off the power unit **14.** The casing **18** may be formed of several parts or shells, adapted to be fixed together, e.g., by screwing or snap-fitting. The casing **18** may in particular be comprised of two or three parts or shells to be fixed together.

The vaporizer **12** may comprise a cartridge **24** or reservoir or pod, which holds an aerosol precursor material. The aerosol precursor material may contain at least one among tobacco products, nicotine, flavorings and other chemicals. The aerosol precursor material can be liquid or solid. Instead of the cartridge **24** or reservoir or pod, the vaporizer **12** may be configured to receive an aerosol precursor having rod shape.

The vaporizer **12** may further comprise a heating device **26** for heating the aerosol precursor material comprised in the cartridge **24.** The heating device **26** is powered by the power unit **14.** The heating device **26** can be a resistor. Alternatively, the heating device **26** is inductive.

The power unit **14** may comprise a battery. The power unit **14** may further comprise a charging interface for the battery. The charging interface may take the form of a mini-USB port, USB-C port or any other format apparent to those skilled in the art.

The controller **16** may comprise one printed circuit board (PCB) **28** or more than one printed circuit board (PCB) **28.** In this latter case, the PCB may be connected together. Such PCB may comprise a microcontroller unit (MCU).

In the following, reference is made to one single PCB **28** keeping in mind that the different elements on this single PCB **28** can be on different PCB connected together.

Puffing may activate the battery-powered heating device **26,** which vaporizes the aerosol precursor material in the cartridge **24.** The user then inhales the resulting aerosol or vapor through the mouthpiece **20.**

As shown on FIG. 2, the controller **16** can include a driving circuit **30** for a plurality of transducers **32** received in the casing **18** or fixed on the casing **18.** The transducers **32** can be ultrasound transducers **32** adapted to emit ultrasound waves **UW.** Ultrasound waves **UW** are pressure waves with a frequency greater than 16 kHz, preferably greater than 20 kHz. Preferably, the ultrasound waves have a frequency below 10 MHz. The transducers **32** can be arranged according to an array (or matrix) pattern in or on the casing **18.** For example, at least one, preferably at least 5, more preferably at least 10 ultrasound transducers **32** are provided in or on the casing **18** of the electronic vaping device **10.**

Here, the driving circuit **30** controls the transducers **32** so that they emit ultrasound waves UW towards a target spot **34.** As illustrated on FIG. 2, the target spot **34** is outside the casing **18** of the electronic vaping device **10.** The target spot **34** can be located on the longitudinal axis **A** of the casing **18.** For example, the target spot **34** can be at a distance comprised between 5 mm and 50 mm from the end of the casing **18** formed by the mouthpiece **20.** Accordingly, the target spot **34** can be located on the tongue **36** of the user of the electronic vaping device **10,** when the user is puffing with the mouthpiece **20** in his or her mouth.

Moreover, the driving circuit **30** controls the transducers **32** so that the ultrasound waves **UW** are emitted with designed phase delays. The phase delays between the ultrasound waves **UW** are designed to create interferences, especially constructive interferences, between the ultrasound waves **UW** on the target spot **34.** More precisely, the phase delays between the ultrasound waves **UW** are preferably designed so that the interferences between the ultrasound waves **UW** generate a haptic stimulation on the target spot **34.** The haptic stimulation on the target spot **34** can correspond to a local maximal pressure, which is high enough to be felt by the user, whereas the maximal pressure of each of the ultrasound waves **UW** is not high enough to be felt by the user, outside the target spot **34.** The local maximal pressure of the haptic stimulation may be chosen based on the user's local pressure receptors. For example, the local maximal pressure is at least of 100 Pa, preferably at least of 500 Pa and/or at most of 50 kPa, preferably at most of 10 kPa.

The haptic stimulation on the target spot **34** can imply movement/s of area/s of the user's body which are higher than the "vibrotactile perception threshold" as defined in ISO 13091-1 standard. Preferably, the movement/s of the area/s of the user's body implied by the haptic stimulation on the target spot **34** is/are lower than those causing discomfort or damage to the user.

Preferably the ultrasound waves **UW** do not produce any perceptible stimulus outside the target spot **34.**

Also, the local maximal pressure of the haptic stimulation can be adjusted, within a range, by the user of the electronic vaping device **10.** For example, this local maximal pressure of the haptic stimulation can be adjusted through a connected application, e.g. on the user's phone or tablet. Alternatively, the electronic vaping device **10** is provided with means for adjusting the local maximal pressure of the haptic stimulation on the target spot **34,** on the casing **18.**

The haptic stimulation on the target point **34** can be used to provide the user with different information and/or experiences.

For example, the target point **34** can be moved depending on the temperature of the heating device **26** and/or of the aerosol precursor material to inform the user that the correct temperature was reached. For example, the target point **34** can be moved from outside the tongue **36** of the user onto the tongue **36** of the user, when the heating device **26** and/or the aerosol precursor is/are warmed up, the position of the target point **34** on the tongue of the user indicating that the heating device **26** and/or the aerosol precursor material has reached the correct temperature so as to provide an aerosol, preferably without burning the aerosol precursor.

To do so, the location of the target spot **34** can be changed over time e.g., by changing the phase delays between the **UW** emitted by the transducers **32.** The phase delays between the **UW** can be changed e.g., by changing the phase delays between the signals controlling the different transducers **32,** depending on the temperature of the heating device **26** and/or the aerosol precursor material.

To stimulate the user in different ways, the haptic stimulation on the target spot **34** can be pulsing or modulated in intensity, e.g., with a pulse width modulation (PWM) or analogically with amplitude modulation. For example, pressure pulsations on the target **34** can be used to indicate a soon ending vaping session.

Moreover, there could be more than one target spot **34** and/or a more sophisticated shape that changes over time, stimulating the skin and/or tongue **36** of the user in different areas. Thus, the user can be provided with a local massage during his or her vaping experience.

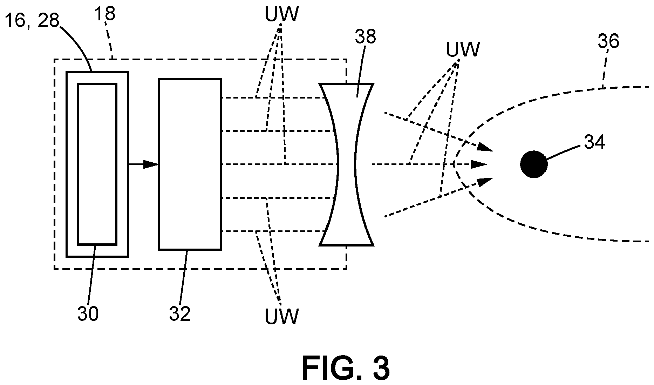

FIG. 3 shows a second example of electronic vaping device **10** comprising only one ultrasound transducer **32** controlled by the driving circuit **30.** According to this second example, the electronic vaping device **10** comprises focusing means of ultrasound waves **UW,** in the present case a sound lens **38.** The ultrasound transducer **32** can emit a plurality of synchronous ultrasound waves **UW** in direction of the sound lens **38,** without any phase delay between them or with designed phase delays between the ultrasound waves **UW.** The sound lens **38** then focuses the ultrasound waves **UW** on the target spot **34,** preferably so as to produce constructive interferences on the target spot **34.** The stimulus resulting of the constructive interferences on the target spot **34** can be a pressure wave, with a local maximal pressure, high enough to be felt by the user, whereas the maximal pressure of each of the ultrasound waves **UW** is not high enough to be felt by the user, especially outside the target spot **34.**

The sound lens **38** can be made in a material in which sound travels faster than into air, e.g., metal like iron, aluminum or steel. In this case, the sound lens **38** can be concave, as shown on FIG. 3, so that the target spot **34** is located in the prolongation of axis **A** of the casing **18** of the electronic vaping device **10.**

Here, the haptic stimulation on the target spot **34** can e.g. indicate to the user that the heating device **26** and/or the aerosol precursor is/are warmed up and reached the necessary temperature. Indeed, the target spot **34** can thus simply be moved by warming up the sound lens **38** simultaneously with the heating device **26** and/or the aerosol precursor.

Preferably the ultrasound waves **UW** do not produce any perceptible stimulus outside the target spot **34.**

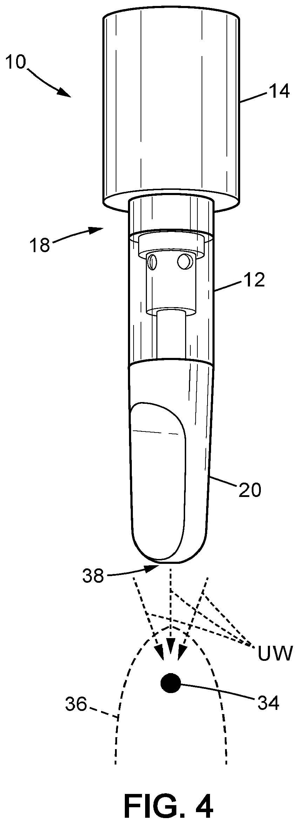

According to the embodiment schematically represented on FIG. 4, the sound lens **38** can be formed by the mouthpiece **20** of the electronic vaping device **10.** In this case, the material forming the mouthpiece **20** can be thinner in the center and thicker on the sides of the mouthpiece, to get a focusing effect of the mouthpiece **20,** as for the sound lens **38** shown on FIG. 3. In other words, the wall of the mouthpiece **20** can be thinner in the center than on the peripheric portion of the mouthpiece **20.**

Preferably the ultrasound waves **UW** do not produce any perceptible stimulus outside the target spot **34.**

The invention is not limited to the embodiments shown on the appended drawings. On the contrary, many variants of the electronic vaping device can be imagined by one with ordinary skills in the art.

For example, the electronic vaping device can comprise one or more transducers adapted to emit a carrier wave which is modulated in amplitude according to the shape of the haptic stimulus at lower frequencies. The transducers can produce more than one carrier wave at the same time, to generate complex interference patterns in space. In this case, the phase differences between the waves emitted by the different transducers need to be controlled e.g. by the PCB **28.**

According to a further embodiment, one single transducer generates one carrier wave which focus on the target spot **34.** The carrier wave can be modulated to obtain a pulsating stimulus at a lower frequency, e.g. around 10 Hz.

The transducers **32** and/or the focusing means **38** can be controlled, e.g. by the PCB **28,** to generate one or more different waveforms, which may vary across many different combinations of amplitude, frequency, and duration. Such waveforms may define relatively simple patterns, such as short pulses of constant intensity, or relatively complex patterns, such as pulses of increasing and decreasing intensity.

The stimulus provided on the target spot **34** may inform the user about a manual input from a user or an input resulting from a function of the electronic vaping device **10.** For example, the input may include actuation of a power button or the like by a user. Alternatively, the input may include the attachment of a cartridge **34** in the electronic vaping device **10.** In further examples, the input may be a signal from a sensor or the like, such as relating to the fluid level in the cartridge **24,** power delivery to a heater, temperature of the heating device **26** and/or the temperature of the aerosol precursor material, or the like. A sensor, e.g., a temperature sensor, may be present in addition to a flow sensor, whose output signal can influence the stimulus provided on the target spot **34** of the user.

The electronic vaping device **10** can comprise an electronic command unit adapted to control at least one among the at least one transducer and the focusing means, if applicable, to move the at least one spot. The electronic command unit may further or alternatively be adapted to control at least one among the at least one transducer and the focusing means, if any, to modulate, especially to pulse, pressure at the at least one spot **34.** The electronic command unit may also be adapted to control at least one among the at least one transducer **32** and the focusing means **38,** if any, in response to a signal indicating an end of a vaping session.

## Claims

1. An electronic vaping device (10) comprising a casing (18) receiving at least one transducer (32) adapted to emit a plurality of ultrasound waves (UW) adapted to be focused onto at least one spot (34) outside the casing (18) to generate a pressure at the at least one spot (34) which can be felt by a pressure receptor of a user's skin or tongue (36).

2. The electronic vaping device of claim 1, comprising a plurality of transducers (32), wherein each transducer (32) is adapted to emit an ultrasound wave (UW) with a specific phase delay, onto said at least one spot (34) so that the difference between the specific phase delays of the ultrasound waves (UW) is minimized at the at least one spot (34).

3. The electronic vaping device of claim 2, comprising focusing means (38) interposed between the plurality of transducers (32) and the at least one spot (34), the focusing means (38) being adapted to focus ultrasound waves (UW) emitted by the plurality of transducers, each with a specific phase delay, onto said at least one spot (34) so that the difference between the phase delays of the ultrasound waves (UW) is minimized on said at least one spot (34).

4. The electronic vaping device of claim 1, comprising a plurality of transducers (32) wherein each transducer (32) is adapted to emit an ultrasound wave (UW) with a specific frequency onto said at least one spot (34) outside the casing (18).

5. The electronic vaping device of one of claims 2 to 4, wherein the transducers (32) are arranged to form an array of transducers.

6. The electronic vaping device of claim 1, comprising only one transducer (32), the transducer (32) being adapted to emit a plurality of ultrasound waves (UW), each with a specific phase delay, and focusing means (38) adapted to focus the ultrasound waves (UW) onto the at least one spot (34) outside the casing (18), so that the difference between the specific phase delays is minimized on the at least one spot (34).

7. The electronic vaping device of claim 1, comprising only one transducer (34), the transducer being adapted to emit a plurality of ultrasound waves, each with a specific frequency, onto the at least one spot (34).

8. The electronic vaping device of any one of the preceding claims in combination with claim 3 or 6, wherein the focusing means includes an acoustic lens (38).

9. The electronic vaping device of claim 8, wherein the acoustic lens (38) is made in a material in which ultrasound waves propagate faster than in air, the acoustic lens (38) being preferably concave.

10. The electronic vaping device of claim 8 or 9, wherein the acoustic lens is formed by the casing (18) of the electronic vaping device (10), especially an end of the housing of the electronic vaping device.

11. The electronic vaping device of claim 10, wherein the acoustic lens (38) if formed by a mouthpiece (20) of the electronic vaping device (10).

12. The electronic vaping device of any one of the preceding claims, wherein the at least one spot (34) outside the casing (18) is adapted to correspond to a spot on a tongue (36) or on a chick of a user of said electronic vaping device (10), when the electronic vaping device (10) is received in a mouth of the user.

13. The electronic vaping device of any one of the preceding claims, further comprising an electronic command unit (28) adapted to control at least one among the at least one transducer (32) and the focusing means (38), if applicable, to move the at least one spot (34).

14. The electronic vaping device of any one of the preceding claims, further comprising an electronic command unit (28) adapted to control at least one among the at least one transducer (32) and the focusing means (38), if applicable, to modulate, especially to pulse, pressure on the at least one spot (34).

15. The electronic vaping device of claim 13 or 14, wherein the electronic command unit (28) is adapted to control at least one among the at least one transducer (32) and the focusing means (38), if applicable, in response to a signal indicating an end of a vaping session.
